# EUROPÄISCHE PATENTSCHRIFT

(11) **EP 2 664 441 B1**
(45) Veröffentlichungstag und Bekanntmachung des Hinweises auf die Patenterteilung: **13.08.2014**
(21) Anmeldenummer: 12167924.5
(22) Anmeldetag: 14.05.2012
(51) Int. Cl.: B29C 65/36

(54) **Vorrichtung zum Walzensiegeln von Folien**
Device for roll sealing films
Dispositif de scellement par cylindre de feuilles

(43) Veröffentlichungstag der Anmeldung: 20.11.2013
(73) Patentinhaber: UHLMANN PAC-SYSTEME GmbH & Co. KG, 88471 Laupheim (DE)
(72) Erfinder: Gertitschke, Detlev, 88471 Laupheim (DE); Liebhardt, Jürgen, 88471 Laupheim (DE); Lehmann, Robert, 79194 Gundelfingen (DE)
(74) Vertreter: Wächter, Jochen

(56) Entgegenhaltungen:
- EP-A1- 0 731 027
- EP-A1- 2 070 687
- WO-A1-2009/103981
- GB-A- 1 161 901

## Beschreibung

Die vorliegende Erfindung betrifft eine Vorrichtung zum Walzensiegeln von Folien, insbesondere von Formfolien, die mit kleinen pharmazeutischen Produkten gefüllte Näpfe aufweisen, mit einer Deckfolie mittels Heißsiegeln in einer so genannten Thermoformmaschine. Dabei werden die Formfolie und eine Deckfolie zwischen einer Vorschubwalze und einer auf diese mit einer Siegelkraft drückenden Siegelwalze hindurchgeführt und zu einem dichten Folienverbund versiegelt.

Um bei einer kontinuierlichen Walzensiegelung unter Verwendung einer Vorschubwalze und einer beheizbaren Siegelwalze alle Deckfolienarten bei höheren Bahngeschwindigkeiten bearbeiten zu können, muss dem eigentlichen Siegelvorgang eine Vorheizung vorgeschaltet sein. Der Einsatz der Vorheizung bewirkt, dass die Erwärmungszeit der Deckfolie bis zum Erreichen der Siegeltemperatur verlängert wird. Üblicherweise besteht die Deckfolie aus einer mit einem Heißsiegellack beschichteten Aluminiumfolie. In zunehmendem Maße kommen bei kindersicheren Blisterpackungen Deckfolien zum Einsatz, bei denen die Aluminiumfolie zusätzlich auf der Außenseite mit einer Papierschicht kaschiert ist. Da Papier jedoch ein schlechter Wärmeleiter ist, ist zur Erreichung einer hohen Verarbeitungsleistung eine längere Vorheizung erforderlich, die den Siegellack vor dem Einlauf in die Siegelstation auf Schmelztemperatur erwärmt.

Alle bisher in Verbindung mit Aluminiumfolie verwendeten Vorheizungen sind für die Verarbeitung der Papierschicht jedoch nicht geeignet, da sie keine ausreichende Heizleistung in einer kurzen Zeitdauer bereitstellen können. Bei der Erwärmung von der Papierseite aus muss bei den bekannten Vorheizungseinrichtungen mit einer sehr hohen Temperatur gefahren werden, um eine hohe Verarbeitungsleistung zu erreichen. Dies kann zur unerwünschten Braunfärbung der Papierschicht führen, insbesondere bei Start- und Stoppvorgängen der Thermoformmaschine. Zusätzlich besteht bei Klebestellen, die mit der gleichen Temperatur aufgeheizt werden, die Gefahr eines Folienrisses, da die Deckfolie meist über mehrere Umlenkungen zugeführt wird.

Bei einer Erwärmung mittels Kontaktheizung muss die Temperatur unterhalb der Schmelztemperatur des Siegellacks bleiben, da sonst der Lack beschädigt werden kann. Zudem besteht die Gefahr, dass sich auf der Kontaktfläche der Vorheizungseinrichtung Partikel ablagern, die sich während der Produktion lösen und in die Packung gelangen.

Zudem sind die bekannten Vorheizungseinrichtungen wie die Kontaktheizung aufgrund der hohen Massen, die erwärmt werden, thermisch träge, und deshalb ist eine schnelle Änderung der Produktionsgeschwindigkeit bei derartigen Vorheizeinrichtungen nicht möglich.

Die WO 2009/103981 A1 offenbart beispielsweise eine Vorrichtung zum Verkleben von zwei Materialien. Heizvorrichtungen, z.B. Infrarotheizer, erwärmen hierfür die Klebefläche eines der Materialen oder die Klebeflächen beider Materialen berührungslos, bevor diese zwischen zwei Walzen hindurchgeführt und von diesen zusammengedrückt werden, um die Klebeverbindung zu erzeugen.

Die EP 2 070 687 A1 beschreibt eine Verpackungsmaschine mit einer Induktionsheizung, die dazu geeignet ist ein Bearbeitungswerkzeug der Verpackungsmaschine mittels induktiv erzeugter Wirbelströme zu erwärmen.

Die EP 0 731 027 A1 offenbart ebenfalls eine Verpackungsmaschine. In dieser werden Produkte einzeln in Folie verpackt, indem diese um die Produkte herum gefaltet wird und diese Umhüllung anschließend versiegelt wird. Hierzu wird die Folie an den zu versiegelnden Kanten zunächst durch elektromagnetische Induktion erwärmt.

Die GB 1 161 901 offenbart eine Vorrichtung zum Verbinden von thermoplastischen Materialien mit anderen Materialien. Auch hier werden die thermoplastischen Materialien (z.B. Folien) zunächst gleichmäßig durch ein magnetisches Wechselfeld erwärmt, das durch verschiedene Anordnungen von Magneten erzeugt werden kann.

Es ist die Aufgabe der vorliegenden Erfindung, eine Vorrichtung zum Walzensiegeln von Folien bereitzustellen, bei der die Heizvorrichtung zur Vorheizung der Deckfolie Beschädigungen der Deckfolienzusammensetzung vermeidet, schnell und exakt regelbar ist, um unterschiedlichen Produktionsgeschwindigkeiten Rechnung zu tragen, flexibel auf unterschiedliche Folienbreiten einstellbar ist und kompakt sowie möglichst einfach aufgebaut ist.

Diese Aufgabe wird durch die Merkmale des Anspruchs 1 gelöst.

Erfindungsgemäß weist die Vorrichtung zum Walzensiegeln von Folien eine Vorschubwalze und eine auf diese mit einer Siegelkraft drückenden Siegelwalze, wobei eine Formfolie und eine Deckfolie zwischen der Siegelwalze und der Vorschubwalze hindurchführbar und zu einem versiegelten Folienverbund versiegelbar sind, und eine Heizvorrichtung zur Vorheizung der Deckfolie vor dem Siegelvorgang auf, wobei die Heizvorrichtung als berührungslose Induktionsheizeinrichtung ausgebildet ist und folgende Elemente aufweist: eine Mehrzahl von in Laufrichtung der Deckfolie hintereinander angeordneten Spulen, deren Windungen im Wesentlichen in einer Ebene angeordnet sind, eine Mehrzahl von quer zur Laufrichtung der Deckfolie angeordneten und mindestens einer der Spulen gegenüberliegenden Magnetfeldbeeinflussungselementen, wobei zwischen der mindestens einen der Spulen und den Magnetfeldbeeinflussungselementen ein Durchtrittskanal für die Deckfolie ausgebildet ist, wobei der Abstand der Magnetfeldbeeinflussungselemente zu der mindestens einen der Spulen jeweils über einen Stellantrieb einstellbar ist, eine Mehrzahl von quer zur Laufrichtung der Deckfolie und stromab der Magnetfeldbeeinflussungselemente angeordneten Temperatursensoren zur Erfassung des Temperaturprofils der Deckfolie, und eine Steuereinrichtung, die geeignet ist, auf Basis der Messwerte der Temperatursensoren mittels Verändern des Abstands der einzelnen Magnetfeldbeeinflussungselemente von der mindestens einen der Spulen die Temperatur der Deckfolie zu regeln.

Mit Hilfe der berührungslosen Induktionsheizeinrichtung wird die metallische Hauptschicht der Deckfolie aufgrund des magnetischen Wechselfeldes und der dort erzeugten Wirbelströme direkt und berührungslos erhitzt, und damit auch die darauf aufgebrachten Siegellack- und Papierschichten sowie gegebenenfalls weitere Schichten wie zum Beispiel eine Schutzlackschicht. Die den Spulen gegenüber liegenden Magnetfeldbeeinflussungselemente bündeln das magnetische Wechselfeld und verändern damit die Heizwirkung in der Deckfolie. Die individuell einstellbaren Abstände zwischen Magnetfeldbeeinflussungselementen und Spule(n) ermöglichen eine Veränderung bzw. Verstärkung des magnetischen Flusses und damit insbesondere eine Einstellung einer homogenen Temperaturverteilung über die gesamte Breite der Deckfolie, und zwar anpassbar an unterschiedliche Breiten von Deckfolien. Die stromab der Magnetfeldbeeinflussungselemente angeordneten Temperatursensoren liefern die regelbare Messgröße des Temperaturregelkreises, der von der Steuereinrichtung geregelt ist, und messen das Temperaturprofil möglichst nahe am Ort des Aufliegens auf der Siegelwalze. Durch die mehreren in Laufrichtung hintereinander angeordneten Spulen kann der Temperaturanstieg innerhalb der Deckfolie schrittweise erfolgen. Die Konstruktion mit mehreren Spulen und gegenüber liegenden, einstellbaren Magnetfeldbeeinflussungselementen und Temperatursensoren ist relativ einfach.

In einer bevorzugten Ausführungsform ist die Steuereinrichtung geeignet, mittels Änderung des Stroms durch eine oder mehrere der Spulen und/oder mittels Änderung des Abstands der Spulen zu den Magnetfeldbeeinflussungselementen die Temperatur der Deckfolie zu regeln. Bei einer Anordnung von mehreren Spulen hintereinander in Laufrichtung der Deckfolie kann der Temperaturanstieg graduell bzw. stufenweise eingestellt werden, indem beispielsweise die Induktionsheizleistung in Laufrichtung pro Spule jeweils etwas erhöht wird. Alternativ ist es möglich, auch durch den Abstand der Spulen von den Magnetfeldbeeinflussungselementen bzw. von der Deckfolie den Temperaturanstieg innerhalb der Deckfolie entsprechend den Materialbedingungen und Erwärmungsanforderungen zu regeln.

Bevorzugt sind die Spulen jeweils um einen E-förmigen Ferritkern gewickelt. Ein Ferrit als Kern einer Spule erhöht bei Stromfluss die magnetische Flussdichte durch die Deckfolie. Dadurch steigert sich die Heizleistung der Spule der Induktionsheizeinrichtung. Es sind auch alternativ andere Formen möglich wie zum Beispiel ein C-Kern, ein U-Kern, ein ER-Kern und dergleichen mehr. Ebenso können neben Ferriten andere geeignete magnetische Materialien verwendet werden.

Mit besonderem Vorteil erstrecken sich die Windungen einer oder mehrerer der Spulen mindestens über die Breite der Deckfolie. Damit ist gewährleistet, dass die komplette Breite der Deckfolie von dem Magnetfeld durchflossen und damit aufgeheizt wird. Es ist ebenfalls denkbar, dass sich die Spulen nicht über die komplette Breite erstrecken, sondern sich quer zur Laufrichtung ergänzen oder überlappen. Damit kann auch durch entsprechendes Anordnen der Spulen Einfluss auf das Temperaturprofil der Deckfolie genommen werden.

Besonders bevorzugt ist es, wenn die Magnetfeldbeeinflussungselemente nebeneinander in einer Reihe angeordnet sind. Dies führt insbesondere zu einer kompakten, einfachen Struktur, die ausreichend Flexibilität bietet und mit vertretbarem Aufwand herzustellen ist. Es ist auch möglich, mehrere Reihen von Magnetfeldbeeinflussungselementen in Laufrichtung hintereinander anzuordnen, wobei jedes Magnetfeldbeeinflussungselement einer bestimmten Reihe beispielsweise versetzt zu einem Magnetfeldbeeinflussungselement einer davor oder dahinter angeordneten Reihe angeordnet ist. Damit ist es möglich, das Temperaturprofil noch exakter auf unterschiedliche Folienbreiten einzustellen.

Bevorzugt ist ebenfalls, die Temperatursensoren nebeneinander in einer Reihe anzuordnen. Bei der Anordnung und Auswahl der Temperatursensoren ist es wichtig, das Temperaturprofil möglichst über die gesamte Breite der Deckfolie zu erfassen. Entspricht beispielsweise die Anzahl von Magnetfeldbeeinflussungselementen der Anzahl von Temperatursensoren, und sind die Messfelder entsprechend auf die Größen der Magnetfeldbeeinflussungselemente abgestimmt, dann ist eine Temperaturregelung auf relativ einfache Weise möglich. Es ist jedoch auch denkbar, eine größere Anzahl von Temperatursensoren mit entsprechend kleineren Messfeldern zu verwenden, um die Messgenauigkeit zu erhöhen.

Weiterhin ist es bevorzugt, dass die Leistungsdichten der Spulen unterschiedlich sind und der Strom durch jede der Spulen einzeln regelbar ist. Wie bereits oben erwähnt, ist dadurch der Anstieg der Temperatur in Laufrichtung der Deckfolie schrittweise bzw. graduell einstellbar.

Der Stellantrieb der Magnetfeldbeeinflussungselemente ist vorzugsweise ein Servomotor, ein Schrittmotor, ein Formgedächtnislegierungsstellglied, ein hydraulisch angetriebenes oder ein pneumatisch angetriebenes Stellglied. Derartige Antriebe sind in sehr feinen Abstufungen einstellbar und in der Positionierung sehr genau, wodurch Ungleichmäßigkeiten im Temperaturprofil minimiert werden können.

Mit weiterem Vorteil ist die Steuereinrichtung geeignet, die Temperatur der Deckfolie in Abhängigkeit der Foliengeschwindigkeit zu regeln.

Bevorzugt sind die Magnetfeldbeeinflussungselemente als Ferrite ausgebildet. Alternativ können auch andere geeignete magnetische Materialien verwendet werden, die ähnliche Eigenschaften aufweisen.

Mit besonderem Vorteil sind die Temperatursensoren als Infrarotsensoren ausgebildet. Diese Art von Temperatursensoren ist sehr schnell und genau in der Messung sowie schonend für die Deckfolie, weil die Temperaturmessung berührungslos erfolgt.

Weitere Vorteile und Merkmale der erfindungsgemäßen Vorrichtung zum Walzensiegeln von Folien ergeben sich aus der nachfolgenden Beschreibung unter Bezugnahme auf die Zeichnungen.
- Fig. 1: ist eine schematische Darstellung einer erfindungsgemäßen Vorrichtung zum Walzensiegeln von Folien im Überblick;
- Fig. 2: ist eine Querschnittsansicht eines Teils einer bevorzugten Ausführungsform der erfindungsgemäßen Vorrichtung zum Walzensiegeln von Folien, in der die Wirkung der Induktionsheizeinrichtung auf die Deckfolie veranschaulicht ist;
- Fig. 3: zeigt eine Querschnittsdarstellung von Teilen der bevorzugten Ausführungsform der erfindungsgemäßen Vorrichtung zum Walzensiegeln von Folien;
- Fig. 4: zeigt eine Anordnung von Temperatursensoren der bevorzugten Ausführungsform der erfindungsgemäßen Vorrichtung zum Walzensiegeln von Folien;
- Fig. 5: zeigt die Temperatursensoren aus Fig. 4 in Draufsicht;
- Fig. 6: zeigt in Draufsicht die Temperaturverteilung auf einer stehenden Deckfolie des durch die Spulen erzeugten Magnetfelds ohne die Wirkung der Magnetfeldbeeinflussungselemente;
- Fig. 7: zeigt eine Kurvendarstellung des Temperaturprofils quer zur Laufrichtung der Deckfolie ohne Wirkung der Magnetfeldbeeinflussungselemente bei laufender Folie;
- Fig. 8: zeigt eine Kurvendarstellung des Temperaturprofils quer zur Laufrichtung der Deckfolie mit Wirkung der Magnetfeldbeeinflussungselemente bei laufender Folie.

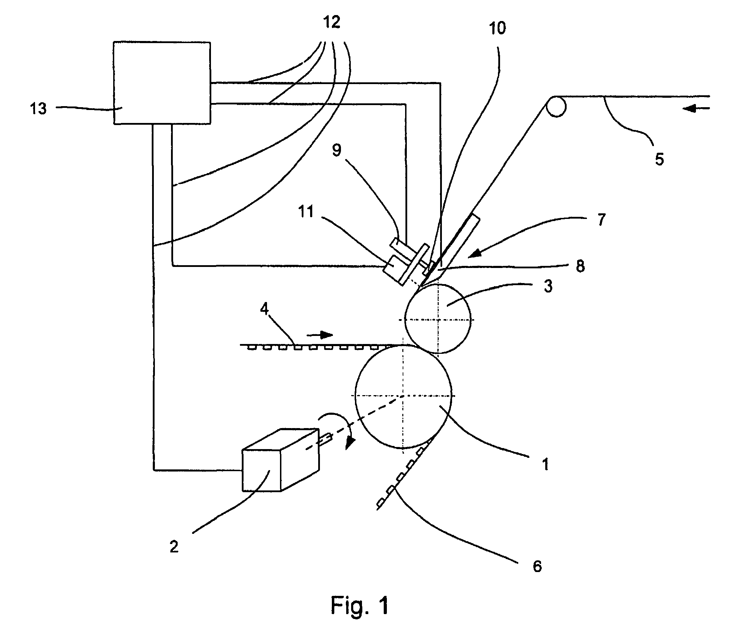

Eine bevorzugte Ausführungsform der erfindungsgemäßen Vorrichtung zum Walzensiegeln von Folien ist in Fig. 1 dargestellt. Dort werden zwischen einer Vorschubwalze 1, die von einem Antrieb 2 im Uhrzeigersinn angetrieben wird, und einer Siegelwalze 3 eine Formfolie 4 und eine Deckfolie 5 hindurchgeführt und zu einem versiegelten Folienverbund 6 versiegelt. Die Formfolie 4 weist eine Mehrzahl von Näpfen auf, die mit Produkten wie beispielsweise Tabletten gefüllt sind und durch die Versiegelung verschlossen werden.

Bevor die Deckfolie 5 auf die in der dargestellten Ausführungsform gegen den Uhrzeigersinn laufende Siegelwalze 3 trifft, wird sie durch eine Induktionsheizeinrichtung 7 auf eine vorbestimmte Temperatur vorgeheizt. Die Induktionsheizeinrichtung 7 wird unter Bezugnahme auf die weiteren Figuren noch ausführlich beschrieben. In Fig. 1 sichtbar ist schematisch ein Gehäuse 8, das die (nicht dargestellten) Spulen enthält, auf der der Siegelwalze 3 zugewandten Seite der Deckfolie 5 sowie auf der anderen Seite der Deckfolie 5 schematisch ein Stellmotor 9 für die Einstellung des Abstands der Magnetfeldbeeinflussungselemente 10 zur Deckfolie 5 und ein Temperatursensor 11 dargestellt. Der Antrieb 2 der Vorschubwalze, die Spulen im Gehäuse 8, die Stellmotoren 9 sowie die Temperatursensoren 11 sind über Leitungen 12 mit der Steuereinrichtung 13 verbunden.

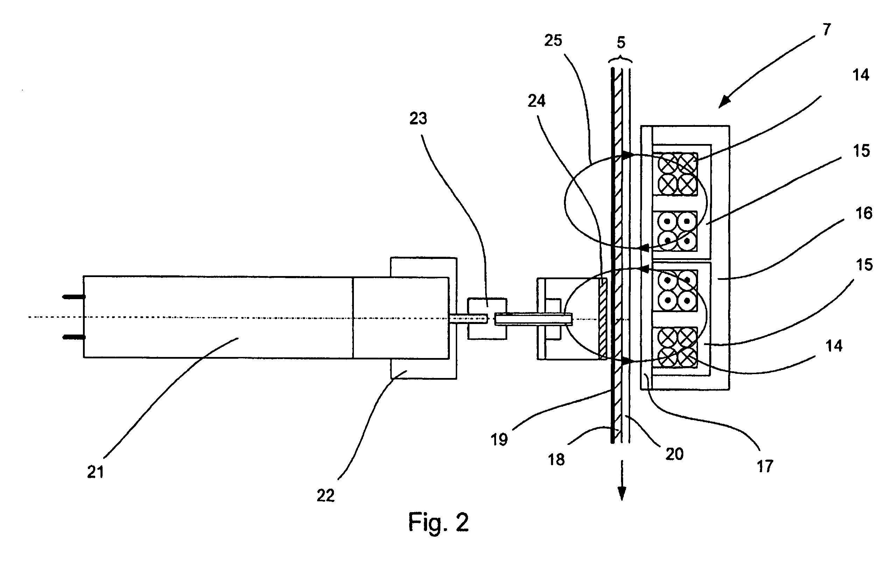

Fig. 2 zeigt schematisch eine Querschnittsansicht eines Ausschnitts der Induktionsheizeinrichtung 7 der bevorzugten Ausführungsform der erfindungsgemäßen Vorrichtung zum Walzensiegeln von Folien. Auf der rechten Seite der Deckfolie 5 erkennt man in Fig. 2 zwei Spulen 14, deren Windungen senkrecht zur Zeichenebene angeordnet sind und die von E-förmigen Ferritkernen 15 umgeben und in einem Gehäuse 16 aufgenommen sind. In Richtung der Deckfolie 5 ist eine nicht metallische Schutzfolie 17 am Gehäuse 16 angebracht, die die Spulen 14 vor Verschmutzungen und Beschädigungen schützt.

Die Deckfolie 5 selbst besteht in der dargestellten Ausführungsform aus einer in Fig. 2 schraffiert dargestellten Aluminiumfolie 18, auf die auf der einen Seite ein Siegellack 19 sowie auf der anderen Seite eine Papierschicht 20 mit Schutzlack aufgebracht ist. Die Deckfolie 5 bewegt sich mit einer bestimmten Prozesslaufgeschwindigkeit in Laufrichtung, die mit einem Pfeil nach unten in Fig. 2 angegeben ist.

Auf der in Fig. 2 links dargestellten Seite der Deckfolie 5 ist ein Stellantrieb 21 erkennbar, der an einer Traverse 22 befestigt ist. Über eine Kupplung 23 bewegt der Stellantrieb 21 ein Magnetfeldbeeinflussungselement 24 senkrecht zur Laufrichtung der Deckfolie 5. Im Bereich nahe an der Deckfolie 5 ist das Magnetfeldbeeinflussungselement 24 als Ferrit ausgebildet.

Fließt durch die Spulen 14 ein Wechselstrom bestimmter Frequenz, so wird ein Wechselmagnetfeld im Bereich der Deckfolie 5 durch jede Spule 14 erzeugt, dessen magnetische Flusslinien 25 schematisch in Fig. 2 dargestellt sind. Das als Ferrit ausgebildete Magnetfeldbeeinflussungselement 24 wirkt auf das Wechselmagnetfeld, wie nachfolgend näher beschrieben werden wird. Das magnetische Wechselfeld induziert in der Aluminiumfolie 18 Wirbelströme, die wiederum das Aluminiummaterial durch den Ohmschen Widerstand aufheizen. Durch die Erwärmung der Aluminiumfolie 18 werden auch der Siegellack 19 und die Papierschicht 20 mit Schutzlack erwärmt, die mit der Aluminiumfolie 18 in Kontakt sind.

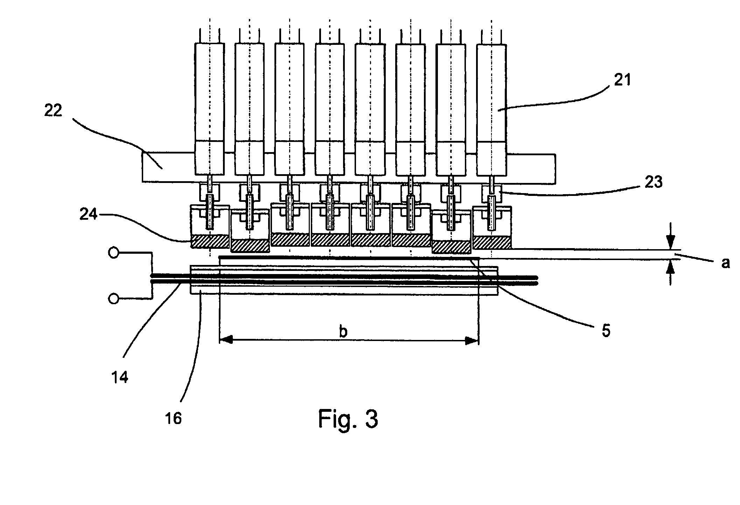

Fig. 3 zeigt eine Querschnittsansicht der Induktionsheizeinrichtung 7 der erfindungsgemäßen Vorrichtung zum Walzensiegeln von Folien in der Ausführungsform von Fig. 2, wobei die Querschnittsebene senkrecht zur Laufrichtung der Deckfolie 5 (und zur Zeichenebene) verläuft. Unterhalb der Deckfolie 5 ist eine Spule 14 in dem Gehäuse 16 angeordnet, wobei das Gehäuse 16 mehr als eine Spule 14 hintereinander in Laufrichtung aufweisen kann. In der hier beschriebenen bevorzugten Ausführungsform sind drei Spulen 14 im Gehäuse 16 vorhanden. Die Spulen 14 erstrecken sich über die Breite b der Deckfolie 5 hinaus. In Fig. 3 oberhalb der Deckfolie 5 sind an der Traverse 22 acht Stellantriebe 21 befestigt, die jeweils über Kupplungen 23 acht Magnetfeldbeeinflussungselemente 24 in ihrer Höhe, das heißt im Abstand a zur Deckfolie 5, einstellen können. Man erkennt, dass zwei der Magnetfeldbeeinflussungselemente 24 etwas näher an die Deckfolie 5 heran positioniert sind, und zwar jeweils in einem Randbereich der Deckfolie 5. Wie bereits unter Bezugnahme auf Fig. 2 oben beschrieben, wirken die Magnetfeldbeeinflussungselemente 24, die hier bevorzugt als Ferrite ausgebildet sind, derart, dass das von den Spulen 14 erzeugte magnetische Wechselfeld im Bereich der Ferrite 24 verstärkt ist. Damit ist auch die Wärmewirkung durch das magnetische Wechselfeld in der Deckfolie 5 bzw. ihrer Aluminiumschicht größer. Weiterhin gilt, dass, je kleiner der Abstand a zwischen Magnetfeldbeeinflussungselement 24 und Deckfolie 5, desto größer die Wärmewirkung in dem Bereich der Deckfolie 5, der dem Magnetfeldbeeinflussungselement 24 am nächsten ist. Auf diese Weise lässt sich durch geeignetes Verstellen des Abstandes a jedes einzelnen Magnetfeldbeeinflussungselementes 24 das Temperaturprofil der Deckfolie 5 über dessen gesamte Breite b einstellen bzw. regeln, wie nachfolgend beschrieben wird. Die Anzahl der Stellantriebe 21 bzw. Magnetfeldbeeinflussungselemente 24 ist im gezeigten Ausführungsbeispiel als acht gewählt, kann sich aber beispielsweise je nach Art des Stellantriebs unterscheiden.

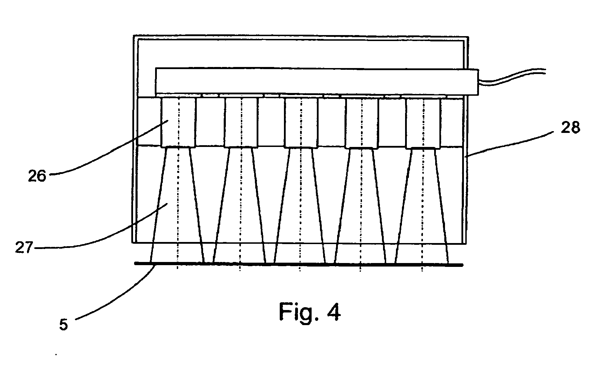

Fig. 4 zeigt in einer Querschnittsansicht senkrecht zur Laufrichtung der Deckfolie 5 eine Reihe von nebeneinander angeordneten Temperatursensoren 26, die an einem Gehäuse 28 befestigt sind und in der bevorzugten Ausführungsform als Infrarotsensoren ausgebildet sind, die die Temperatur berührungslos messen. Ähnlich der Reihe von Magnetfeldbeeinflussungselementen 24 sind die Temperatursensoren 26 quer zur Laufrichtung der Deckfolie nebeneinander in Reihe in gleichen Abständen angeordnet. Jede der Temperatursensoren 26 weist einen Erfassungskegel 27 auf, der einen vorbestimmten, in diesem Fall kreisrunden Erfassungsabschnitt auf der Deckfolie 5 abdeckt und dort die Temperatur misst. Die Reihe von Temperatursensoren 26 ist unmittelbar angrenzend stromab der Magnetfeldbeeinflussungselemente 24 oberhalb der Deckfolie 5 angeordnet, um möglichst nahe am Ort des magnetischen Wechselfeldes und der Magnetfeldbeeinflussung die Temperatur der Deckfolie 5 zu messen. Die Anordnung der Temperatursensoren 26 bezogen auf die Deckfolie 5 muss nicht senkrecht sein, es ist ebenfalls möglich, dass die Temperatursensoren 26 schräg auf die Deckfolie 5 weisen. Damit ist es möglich, noch näher an den Ort der Materialerwärmung der Deckfolie 5 heranzukommen. Auch müssen die Temperatursensoren 26 nicht notwendigerweise in einer Reihe nebeneinander angeordnet sein.

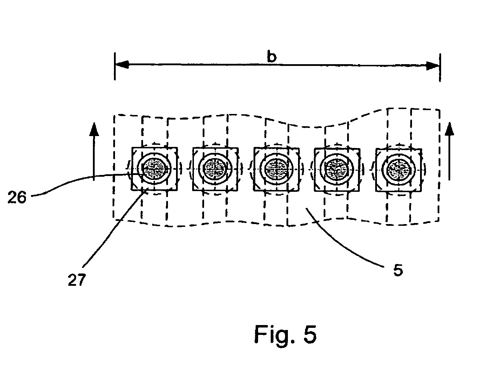

Fig. 5 zeigt in Draufsicht die Anordnung von Temperatursensoren 26 aus Fig. 4, wobei rechts mit dem Pfeil die Laufrichtung der Deckfolie 5 angegeben ist. Man erkennt aus Fig. 5, dass die in einer Reihe nebeneinander angeordneten Temperatursensoren 26 nahezu die vollständige Breite b der Deckfolie 5 thermosensorisch erfassen.

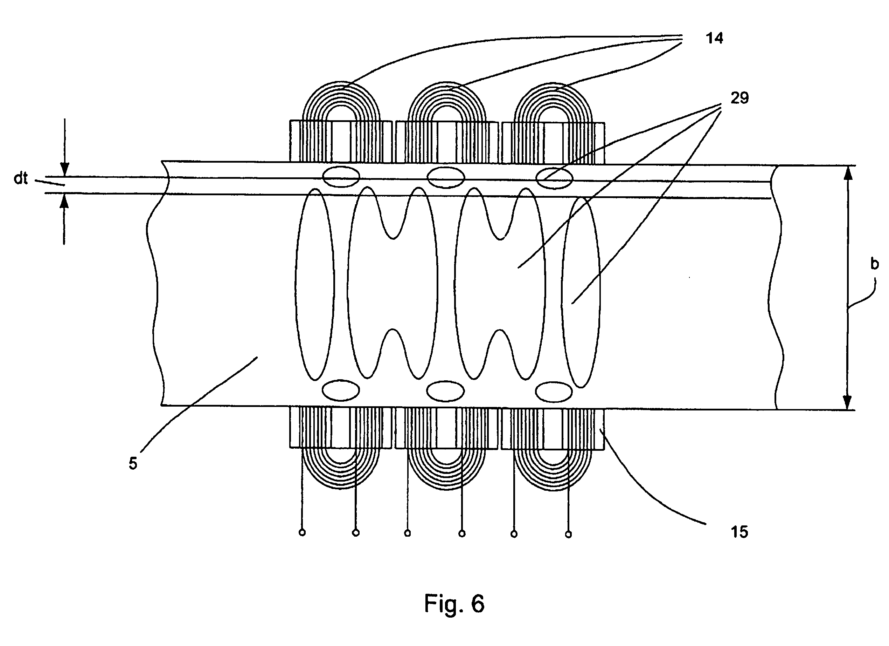

Die Funktion der erfindungsgemäßen Vorrichtung zum Walzensiegeln von Folien wird nachfolgend anhand der Figuren 6 bis 8 ausführlich beschrieben.

Fig. 6 zeigt schematisch die Temperaturverteilung auf der Deckfolie 5, die durch ein magnetisches Wechselfeld der drei Spulen 14 hervorgerufen wird, wenn die Deckfolie 5 sich nicht bewegt. Es ist anzumerken, dass dieser statische Zustand nicht den normalen Betriebszustand der erfindungsgemäßen Vorrichtung zum Walzensiegeln von Folien darstellt, sondern lediglich der Erläuterung der vorliegenden Erfindung dienen soll.

Man erkennt auf der Deckfolie 5 Temperaturfelder 29, die in der Art von Profillinien eingezeichnet sind, d. h. eine geschlossene Linie gibt einen Bereich mit einer im Wesentlichen konstanten Temperatur an. Deutlich wird hierbei, dass die Temperaturverteilung quer zur Laufrichtung, d. h. in Richtung der Breite b der Deckfolie 5, nicht homogen bzw. konstant ist, sondern sich insbesondere jeweils am Rand der Deckfolie 5 Bereiche zeigen, in denen die Temperatur abfällt und etwas weiter außen wieder ansteigt. In diesen Randbereichen ergibt sich damit eine Temperaturdifferenz dt. In Fig. 6 ist diese Zone durch die parallelen Linien gekennzeichnet.

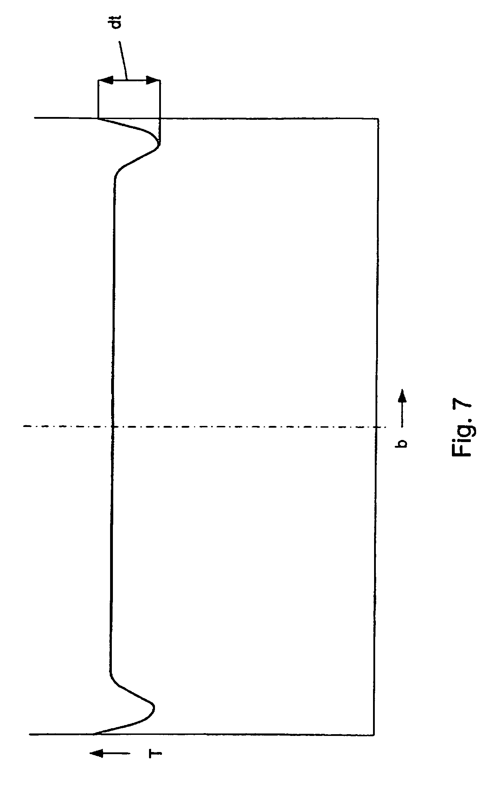

Fig. 7 gibt diesen Zusammenhang in einer Kurvendarstellung wieder, wobei in der Abszisse die Breite b der Deckfolie 5 und in der Ordinate die Temperatur T eingezeichnet ist. Deutlich sind die Abweichungen an den beiden Rändern der Deckfolie 5 vom Wert in der Mitte zu erkennen, wobei die Temperaturdifferenz den absoluten Wert dt aufweist. Eine derartige inhomogene Temperaturverteilung bzw. ein derartiges Temperaturprofil ist für eine zuverlässige Vorheizung der Deckfolie nicht akzeptabel, und deshalb weist die erfindungsgemäße Vorrichtung zum Walzensiegeln von Folien einen Mechanismus auf, der diese Temperaturdifferenzen kompensieren kann und damit ein homogenes Temperaturprofil über die gesamte Breite der Deckfolie bereitstellt.

Durch den Regelkreis, der von der Steuereinrichtung implementiert wird, kann die erfindungsgemäße Vorrichtung auf Temperaturabweichungen reagieren, indem verschiedene Parameter entsprechend der gemessenen Temperaturverteilung der Deckfolie angepasst werden können. Der Hauptparameter ist dabei der Abstand a zwischen jedem einzelnen Magnetfeldbeeinflussungselement 24 und der Deckfolie 5, insbesondere in den Randbereichen der Deckfolie 5 (siehe Fig. 3). Ein weiterer einstellbarer Parameter ist der Abstand der Spulen 14 zur Deckfolie 5, wobei es beispielsweise möglich ist, diesen Abstand pro Spule zu variieren, so dass die in Laufrichtung zuerst angeordnete Spule den größten Abstand aufweist und dieser mit zunehmender Laufrichtung verringert wird. Darüber hinaus ist es ebenfalls möglich, die Stärke des durch die Spulen 14 erzeugten magnetischen Wechselfeldes zu variieren, beispielsweise derart, dass das magnetische Wechselfeld, das durch die erste Spule erzeugt wird, zu einem geringeren Temperaturanstieg in der Deckfolie führt, verglichen mit dem Temperaturanstieg durch die in Laufrichtung stromab angeordneten Spulen. Möglich ist auch eine zeitliche Steuerung des magnetischen Wechselfeldes in Abhängigkeit der Laufgeschwindigkeit der Deckfolie.

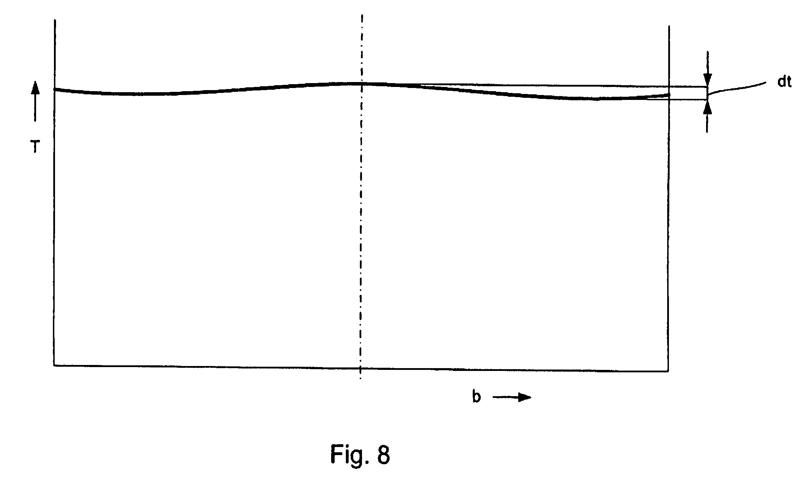

Fig. 8 zeigt das Temperaturprofil bzw. die Temperaturverteilung über die gesamte Breite b der Deckfolie 5 für den geregelten Betrieb der erfindungsgemäßen Vorrichtung, das heißt entsprechend der in Fig. 3 dargestellten Anordnung der Magnetfeldbeeinflussungselemente 24. Man erkennt, dass im Randbereich der Deckfolie 5 die Temperaturdifferenz dt wesentlich geringer ausgebildet ist, so dass sich eine im Wesentlichen homogene Temperaturverteilung quer zur Laufrichtung ergibt.

Mit dem Gegenstand der vorliegenden Erfindung wurde eine Vorrichtung zum Walzensiegeln von Folien bereitgestellt, bei der die Heizvorrichtung zur Vorheizung der Deckfolie Beschädigungen der Deckfolienzusammensetzung vermeidet, schnell und exakt regelbar ist, flexibel auf unterschiedliche Folienbreiten einstellbar ist sowie kompakt und einfach aufgebaut ist.

## Patentansprüche

1. Vorrichtung zum Walzensiegeln von Folien mit
einer Vorschubwalze (1) und einer auf diese mit einer Siegelkraft drückenden Siegelwalze (3), wobei eine erste Folie und eine zweite Folie zwischen der Siegelwalze (3) und der Vorschubwalze (1) hindurchführbar und zu einem versiegelten Folienverbund (6) versiegelbar sind, und
einer Heizvorrichtung (7) zur Vorheizung der zweiten Folie vor dem Siegelvorgang **dadurch gekennzeichnet, dass**
die erste Folie eine Formfolie (4) ist und die zweite Folie eine Deckfolie (5) ist, und die Heizvorrichtung (7) als berührungslose Induktionsheizeinrichtung ausgebildet ist und folgende Elemente aufweist:
eine Mehrzahl von in Laufrichtung der Deckfolie (5) hintereinander angeordneten Spulen (14), deren Windungen im Wesentlichen in einer Ebene angeordnet sind,
eine Mehrzahl von quer zur Laufrichtung der Deckfolie (5) angeordneten und mindestens einer der Spulen (14) gegenüber liegenden Magnetfeldbeeinflussungselementen (24), wobei zwischen der mindestens einen der Spulen (14) und den Magnetfeldbeeinflussungselementen (24) ein Durchtrittskanal für die Deckfolie (5) ausgebildet ist, wobei der Abstand der Magnetfeldbeeinflussungselemente (24) zu der mindestens einen der Spulen (14) jeweils über einen Stellantrieb (21) einstellbar ist,
eine Mehrzahl von quer zur Laufrichtung der Deckfolie (5) und stromab der Magnetfeldbeeinflussungselemente (24) angeordneten Temperatursensoren (26) zur Erfassung des Temperaturprofils der Deckfolie (5), und
eine Steuereinrichtung (13), die geeignet ist, auf Basis der Messwerte der Temperatursensoren (26) mittels Verändern des Abstands der einzelnen Magnetfeldbeeinflussungselemente (24) von der mindestens einen der Spulen (14) die Temperatur der Deckfolie (5) zu regeln.

2. Vorrichtung nach Anspruch 1, **dadurch gekennzeichnet, dass** die Steuereinrichtung (13) geeignet ist, mittels Änderung des Stroms durch eine oder mehrere der Spulen (14) und/oder mittels Änderung des Abstands der Spulen (14) zu den Magnetfeldbeeinflussungselementen die Temperatur der Deckfolie (5) zu regeln.

3. Vorrichtung nach einem der vorhergehenden Ansprüche, **dadurch gekennzeichnet, dass** die Spulen (14) jeweils um einen E-förmigen Ferritkern (15) gewickelt sind.

4. Vorrichtung nach einem der vorhergehenden Ansprüche, **dadurch gekennzeichnet, dass** die Windungen einer oder mehrerer der Spulen (14) sich mindestens über die Breite der Deckfolie (5) erstrecken.

5. Vorrichtung nach einem der vorhergehenden Ansprüche, **dadurch gekennzeichnet, dass** die Magnetfeldbeeinflussungselemente (24) nebeneinander in einer Reihe angeordnet sind.

6. Vorrichtung nach einem der vorhergehenden Ansprüche, **dadurch gekennzeichnet, dass** die Temperatursensoren (26) nebeneinander in einer Reihe angeordnet sind.

7. Vorrichtung nach einem der vorhergehenden Ansprüche, **dadurch gekennzeichnet, dass** die Leistungsdichten der Spulen (14) unterschiedlich sind und der Strom durch jede der Spulen (14) einzeln regelbar ist.

8. Vorrichtung nach einem der vorhergehenden Ansprüche, **dadurch gekennzeichnet, dass** der Stellantrieb (21) der Magnetfeldbeeinflussungselemente (24) ein Servomotor, ein Schrittmotor, ein Formgedächtnislegierungsstellglied, ein hydraulisch angetriebenes oder ein pneumatisch angetriebenes Stellglied ist.

9. Vorrichtung nach einem der vorhergehenden Ansprüche, **dadurch gekennzeichnet, dass** die Steuereinrichtung (13) geeignet ist, die Temperatur der Deckfolie (5) in Abhängigkeit der Foliengeschwindigkeit zu regeln.

10. Vorrichtung nach einem der vorhergehenden Ansprüche, **dadurch gekennzeichnet, dass** die Magnetfeldbeeinflussungselemente (24) als Ferrite ausgebildet sind.

11. Vorrichtung nach einem der vorhergehenden Ansprüche, **dadurch gekennzeichnet, dass** die Temperatursensoren (26) als Infrarotsensoren ausgebildet sind.

## Claims

1. Device for roll sealing films with a feed roller (1) and a sealing roller (3) which presses on the feed roller with a sealing force, wherein a first film and a second film can be guided through between the sealing roller (3) and the feed roller (1) and can be sealed to form a sealed film joint (6), and a heating device (7) for preheating the second film prior to the sealing process, **characterised in that**
the first film is a shape film (4) and the second film is a covering film (5), and the heating device (7) is formed as a contactless induction heating device and comprises the following elements :
a plurality of coils (14) arranged in succession in the running direction of the covering film (5), wherein the windings of the coils are arranged substantially in one plane,
a plurality of magnetic field influencing elements (24) arranged transversely to the running direction of the covering film (5) and lying opposite at least one of the coils (14), wherein a through channel for the covering film (5) is formed between the at least one of the coils (14) and the magnetic field influencing elements (24), wherein the distance of the magnetic field influencing elements (24) from the at least one of the coils (14) can be adjusted each time via a servo drive (21),
a plurality of temperature sensors (26) arranged transversely to the running direction of the covering film (5) and downstream of the magnetic field influencing elements (24) for detecting the temperature profile of the covering film (5), and
a control device (13) which is suitable for regulating the temperature of the covering film (5) on the basis of the measured values of the temperature sensors (26) by means of changing the distance of the individual magnetic field influencing elements (24) of the at least one of the coils (14).

2. Device according to claim 1 **characterised in that** the control device (13) is suitable for regulating the temperature of the covering film (5) by means of changing the current through one or more of the coils (14) and/or by means of changing the distance of the coils (14) from the magnetic field influencing elements.

3. Device according to one of the preceding claims **characterised in that** the coils (14) are each wound around an E-shaped ferrite core (15).

4. Device according to one of the preceding claims **characterised in that** the windings of one or more of the coils (14) extend at least over the width of the covering film (5).

5. Device according to one of the preceding claims **characterised in that** the magnetic field influencing elements (24) are arranged side by side in a row.

6. Device according to one of the preceding claims **characterised in that** the temperature sensors (26) are arranged side by side in a row.

7. Device according to one of the preceding claims **characterised in that** the power densities of the coils (14) are different and the current through each of the coils (14) can be individually regulated.

8. Device according to one of the preceding claims **characterised in that** the servo drive (21) of the magnetic field influencing elements (24) is a servo motor, stepper motor, shape memory alloy actuating member, a hydraulically driven or a pneumatically driven actuating member.

9. Device according to one of the preceding claims characterised that the control device (13) is suitable for regulating the temperature of the covering film (5) in dependence on the film speed.

10. Device according to one of the preceding claims **characterised in that** the magnetic field influencing elements (24) are formed as ferrites.

11. Device according to one of the preceding claims **characterised in that** the temperature sensors (26) are formed as infrared sensors.

## Revendications

1. Dispositif de scellement de feuilles par cylindres, comprenant
un cylindre d'avance (1) et un cylindre de scellement (3) pressant celui-ci par une force de scellement, une première feuille et une seconde feuille pouvant être guidées entre le cylindre de scellement (3) et le cylindre d'avance (1) et être scellées en un compound de feuilles scellé (6), et
un dispositif de chauffage (7) pour le préchauffage de la seconde feuille avant l'opération de scellement,
**caractérisé en ce que**
la première feuille est une feuille moulée (4) et la seconde feuille est une feuille de couverture (5), et
le dispositif de chauffage (7) est réalisé sous forme de dispositif de chauffage par induction sans contact et présente les éléments suivantes :
une pluralité de bobines (14) disposées les unes derrière les autres dans le sens de défilement de la feuille de couverture (5), bobines dont les spires sont disposées essentiellement dans un plan,
une pluralité d'éléments d'influence sur le champ magnétique (24), disposés transversalement au sens de défilement de la feuille de couverture (5) et situés en vis-à-vis d'au moins l'une des bobines (14), un canal de passage pour la feuille de couverture (5) étant réalisé entre la au moins une des bobines (14) et les éléments d'influence sur le champ magnétique (24), l'écartement des éléments d'influence sur le champ magnétique (24) par rapport à la au moins une des bobines (14) étant respectivement réglable par l'intermédiaire d'un mécanisme de commande (21),
une pluralité de capteurs de température (26), disposés transversalement au sens de défilement de la feuille de couverture (5) et en aval des éléments d'influence sur le champ magnétique (24), pour la détection du profil de température de la feuille de couverture (5), et
un dispositif de commande (13) qui se prête, sur la base des valeurs de mesure des capteurs de température (26), à régler la température de la feuille de couverture (5) par variation de l'écartement des éléments d'influence sur le champ magnétique (24) individuels par rapport à la au moins une des bobines (14) .

2. Dispositif selon la revendication 1, **caractérisé en ce que** le dispositif de commande (13) se prête à régler la température de la feuille de couverture (5) par variation du courant à travers l'une ou plusieurs des bobines (14) et/ou par variation de l'écartement des bobines (14) par rapport aux éléments d'influence sur le champ magnétique.

3. Dispositif selon l'une des revendications précédentes, **caractérisé en ce que** les bobines (14) sont chacune enroulées autour d'un noyau de ferrite en E (15).

4. Dispositif selon l'une des revendications précédentes, **caractérisé en ce que** les spires de l'une ou de plusieurs des bobines (14) s'étendent au moins sur la largeur de la feuille de couverture (5).

5. Dispositif selon l'une des revendications précédentes, **caractérisé en ce que** les éléments d'influence sur le champ magnétique (24) sont juxtaposés en une rangée.

6. Dispositif selon l'une des revendications précédentes, **caractérisé en ce que** les capteurs de température (26) sont juxtaposés en une rangée.

7. Dispositif selon l'une des revendications précédentes, **caractérisé en ce que** les puissances volumiques des bobines (14) sont différentes et le courant à travers chacune des bobines (14) est réglable individuellement.

8. Dispositif selon l'une des revendications précédentes, **caractérisé en ce que** le mécanisme de commande (21) des éléments d'influence sur le champ magnétique (24) est un servomoteur, un moteur pas à pas, un actionneur en alliage à mémoire de forme, un actionneur à entraînement hydraulique ou un actionneur à entraînement pneumatique.

9. Dispositif selon l'une des revendications précédentes, **caractérisé en ce que** le dispositif de commande (13) se prête à régler la température de la feuille de couverture (5) en fonction de la vitesse de la feuille.

10. Dispositif selon l'une des revendications précédentes, **caractérisé en ce que** les éléments d'influence sur le champ magnétique (24) sont réalisés sous forme de ferrites.

11. Dispositif selon l'une des revendications précédentes, **caractérisé en ce que** les capteurs de température (26) sont réalisés sous forme de capteurs infrarouge.
